# EUROPÄISCHE PATENTSCHRIFT

(11) **EP 3 959 381 B1**
(45) Veröffentlichungstag und Bekanntmachung des Hinweises auf die Patenterteilung: **13.09.2023**
(21) Anmeldenummer: 20711912.4
(22) Anmeldetag: 16.03.2020
(51) Int. Cl.: E02D 27/04, E02D 27/06, E02D 27/42, E02D 27/52, F03D 13/25, B63B 21/48, B63B 35/44

(54) **GRÜNDUNG EINES OFFSHORE-BAUWERKS MIT EINEM ÜBERTRAGUNGSKABEL UND EINEM SCHUTZELEMENT**
FOUNDATION OF AN OFFSHORE STRUCTURE HAVING A TRANSMISSION CABLE AND A PROTECTIVE ELEMENT
FONDATION D'UNE STRUCTURE OFFSHORE DOTÉE D'UN CÂBLE DE TRANSMISSION ET D'UN ÉLÉMENT DE PROTECTION

(30) Priorität: 23.04.2019 DE 102019110506
(43) Veröffentlichungstag der Anmeldung: 02.03.2022
(73) Patentinhaber: RWE Offshore Wind GmbH, 45141 Essen (DE)
(72) Erfinder: JAHN, Christian, 25451 Quickborn (DE); OBERMEYER, Sebastian, 21147 Hamburg (DE)
(74) Vertreter: Cohausz & Florack
(86) Internationale Anmeldenummer: PCT/EP2020/057089
(87) Internationale Veröffentlichungsnummer: WO 2020/216529

(56) Entgegenhaltungen:
- EP-A1- 3 034 388
- WO-A2-2010/071433
- DE-A1-102009 040 648
- DE-B4-102009 040 648
- GB-A- 2 513 387

## Beschreibung

Die Erfindung betrifft eine Gründung eines Offshore-Bauwerks, insbesondere einer Windkraftanlage, mit einem schwimmenden Fundament, umfassend wenigstens einen Schwimmkörper zum Schwimmen an der Meeresoberfläche, wenigstens einen Anker zum Verankern des wenigstens einen Schwimmkörpers am Meeresboden und wenigstens ein Halteelement zum Halten des wenigstens einen Schwimmkörpers an dem wenigstens einen Anker, wobei sich wenigstens ein Übertragungskabel von dem wenigstens einen Anker entlang des wenigstens einen Halteelements zum wenigstens einen Schwimmkörper und/oder zurück erstreckt. Ferner betrifft die Erfindung ein Offshore-Bauwerk, insbesondere Offshore-Windkraftanlage, mit einer solchen Gründung.

Es sind bereits unterschiedliche Gründungen von Offshore-Bauwerken, insbesondere auch von Offshore-Windkraftanlagen, bekannt, aus denen je nach dem Standort des Offshore-Bauwerks eine geeignete Gründung ausgewählt werden kann. Bei den meisten dieser Gründungen, insbesondere Monopile-, Tripod-, Tripile- oder Jacket-Gründungen, wird das Offshore-Bauwerk fest mit wenigstens einem Pfeiler verbunden, der dann auf dem Meeresboden aufsitzt oder in den Meeresboden gerammt wird. Diese Gründungen bieten sind insbesondere für Standorte mit geringen bis moderaten Wassertiefen an. Viele potentielle Standorte für Offshore-Bauwerke weisen jedoch Wassertiefen von über 30 m oft sogar von über 50 m auf. Bei Wassertiefen von etwa 30 m bis über 300 m bieten sich zunehmend Gründungen mit schwimmenden Fundamenten an.

Aus dem Stand der Technik bekannte Gründungen von Offshore-Bauwerken werden zum Beispiel in der DE 10 2009 040648 A1, WO 2010/071433 A1 und EP 3 034 388 A1 beschrieben.

Schwimmende Fundamente umfassen in der Regel einen Schwimmkörper, der das eigentliche Offshore-Bauwerk trägt und der über zwei oder mehr Anker im Meeresboden verankert ist. Die Anker sind dabei über Ankerseile oder Ankerketten fest mit dem Schwimmkörper verbunden und erlauben es dem Schwimmkörper meist, sich geringfügig zur Seite hin und her zu bewegen. Ferner können einzelne Anker auch über mehrere Ankerseile oder Ankerketten mit mehreren Schwimmkörpern unterschiedlicher Offshore-Bauwerke verbunden werden.

Von dem wenigstens einen Schwimmkörper werden über die Ankerseile oder Ankerketten Zugkräfte auf die Anker übertragen, die dazu führen können, dass sich die Anker lösen. Unter Umständen können aber auch die Ankerseile oder Ankerketten reißen. In beiden Fällen ist die genaue Positionierung des Offshore-Bauwerks nicht mehr oder nicht mehr in der gewünschten Weise möglich. Vor diesem Hintergrund besteht das Bedürfnis nach einer Überwachung der Verankerung der Offshore-Bauwerke, mit der erkannt werden kann, ob sich eine Verbindung oder ein Anker gelöst hat oder Gefahr läuft, sich zu lösen. Um dies zu erreichen, kann zwischen dem Schwimmkörper und wenigstens einem Anker ein Übertragungskabel verlegt werden, das Strom oder ein Signal leiten kann, anhand dessen auf den Zustand der Verankerung geschlossen werden kann.

Dabei ist jedoch sicherzustellen, dass nicht das wenigstens eine Übertragungskabel beschädigt wird, bevor es zu einer Schwächung oder einem Lösen der Verbindung zwischen dem Schwimmkörper und dem Meeresboden kommt. In diesem Falle könnte nämlich der Zustand der Verankerung des Offshore-Bauwerks nicht zufriedenstellend überwacht werden.

Daher liegt der vorliegenden Erfindung die Aufgabe zugrunde, die Gründung und das Offshore-Bauwerk jeweils der eingangs genannten und zuvor näher erläuterten Art derart auszugestalten und weiterzubilden, dass eine zuverlässige Überwachung der Verankerung des Offshore-Bauwerks ermöglicht wird.

Diese Aufgabe wird durch eine Gründung nach Anspruch 1 gelöst.

Zudem wird die genannte Aufgabe bei einem Offshore-Bauwerk nach dem Oberbegriff des Anspruchs 9 dadurch gelöst, dass die Gründung nach einem der Ansprüche 1 bis 8 ausgebildet ist.

Obwohl sich das Übertragungskabel abschnittsweise von dem wenigstens einen Anker entlang des wenigstens einen Halteelements zum wenigstens einen Schwimmkörper und/oder in die andere Richtung erstreckt, wird das Übertragungskabel nicht zusammen mit dem entsprechenden Halteelement am Schwimmkörper oder am Anker festgelegt. Es wird vielmehr ein Schutzelement zwischen dem wenigstens einen Halteelement und dem Schwimmkörper und/oder dem Anker vorgesehen, durch das das Übertragungskabel hindurchgeführt ist. Somit kommt dem Schutzelement der Schutz des Übertragungskabels beim Übergang von dem wenigstens einen Halteelement und dem Schwimmkörper und/oder dem Anker zu. Dieser Bereich des Übertragungskabels ist nämlich in besonderem Maße gefährdet, während des Betriebs des Offshore-Bauwerks beschädigt zu werden. Das Schutzelement ist mithin nicht Teil des wenigstens einen Halteelements, da gerade die Verbindung des Halteelements und des Übertragungskabels gemeinsam entweder am Schwimmkörper oder am Anker als unvorteilhaft erkannt worden ist. Zudem kann ein Schutzelement zwischen dem Halteelement und dem Schwimmkörper vorgesehen sein, um das Übertragungskabel am Schwimmköper anzubinden. Alternativ oder zusätzlich kann aber auch ein Schutzelement zwischen dem Halteelement und dem Anker vorgesehen sein. In beiden Verbindungen wird das Übertragungskabel durch das Schutzelement geschützt, so dass die Gefahr von Beschädigungen durch äußere Einwirkungen auf das Übertragungskabel während des Betriebs des Offshore-Bauwerks erheblich gesenkt werden kann.

Die hohe Schutzwirkung des Schutzelements wird dabei nicht bloß dadurch erreicht, dass das Schutzelement zwischen dem Halteelement und dem Schwimmköper und/oder zwischen dem Halteelement und dem Anker vorgesehen ist. Die Schutzwirkung wird insbesondere auch dadurch erreicht, dass das Übertragungskabel durch das Schutzelement hindurchgeführt ist. Dabei kann sich das Schutzelement vom Halteelement einerseits bis zum Schwimmkörper oder dem Anker andererseits erstrecken. Zwingend ist dies aber nicht. Gleichwohl ist es zum Erzielen einer hohen Schutzwirkung vorteilhaft, wenn sich das Schutzelement wenigstens überwiegend, insbesondere wenigstens im Wesentlichen über die gesamte Distanz, zwischen dem Halteelement einerseits und dem Schwimmkörper oder dem Anker andererseits erstreckt.

Bei einer ersten besonders bevorzugten Ausgestaltung der Gründung ist das wenigstens eine Halteelement als eine Ankerkette oder als ein Ankerseil ausgebildet. Auf diese Weise können einfach und zuverlässig hohe Haltekräfte zum Halten des Schwimmkörpers am entsprechenden Anker aufgenommen und abgeleitet werden. Dabei wird eine besonders langlebige und zuverlässige Fixierung des Schwimmkörpers am Anker ermöglicht, wenn das Ankerseil aus Kunststoffasern oder aus Metalldrähten, insbesondere Stahldrähten, gebildet wird. Das Ankerseil kann dabei insbesondere wegen der mechanischen Eigenschaften ein sogenanntes geschlagenes Seil sein, bei dem die Drähte oder Fasern zu Litzen und diese dann zum Ankerseil verdreht, also geschlagen, werden. Durch das Schlagen bzw. Verdrehen wird ein Ankerseil erhalten, das sich vielfach biegen kann, ohne dabei zu brechen. Die Fertigung von geschlagenen Seilen aus Metalldrähten oder auch Kunststofffasern ist an sich bekannt.

Damit das Übertragungskabel auch außerhalb des Verbindungsbereichs des zugehörigen Halteelements mit dem Schwimmkörper und/oder mit dem Anker zuverlässig vor äußeren Einwirkungen geschützt ist, kann das wenigstens eine Übertragungskabel wenigstens überwiegend innerhalb des Halteelements, insbesondere Ankerseils, angeordnet sein. In diesem Zusammenhang ist von besonderer Bedeutung, dass das Ankerseil viele Meter, beispielsweise über 30 m, über 50 m oder sogar über 100 m, lang sein kann, während der Verbindungsbereich zwischen dem Ankerseil und dem Schwimmkörper oder dem Anker regelmäßig nur wenige Meter betragen wird. Alternativ oder zusätzlich kann auch vorgesehen sein, dass das Schutzelement zwischen dem Ankerseil und dem Schwimmkörper oder dem Anker nur wenige Meter lang und damit sehr viel kürzer ist als das Halteseil und das Übertagungskabel lang sind. Die Integration des Übertragungskabels in das Ankerseil kann sehr einfach erfolgen und dennoch einen umfassenden Schutz bieten, wenn das wenigstens eine Übertragungskabel wenigstens überwiegend als Litze oder als Einlage des Ankerseils innerhalb des Ankerseils angeordnet ist. Dabei ist eine Einlage eines Ankerseils wenigstens im Wesentlichen vollumfänglich und wenigstens im Wesentlichen über die gesamte Länge des Übertragungskabels zwischen dem Schwimmkörper und dem Anker von Litzen des Ankerseils umgeben.

Besonders gut ist das Übertragungskabel vor äußeren Einwirkungen während des Betriebs des Offshore-Bauwerks wenigstens in dem Verbindungsbereich mit dem Schwimmkörper und/oder mit dem Anker geschützt, wenn das wenigstens eine Schutzelement wenigstens abschnittsweise, insbesondere wenigstens im Wesentlichen vollständig, durch ein nach Art einer Schraubenfeder geformtes Rohr gebildet ist. Das Rohr kann dann wie eine Schraubenfeder elastisch verformt werden, um einen Bruch des Rohrs zu vermeiden und dabei gleichzeitig die von außen einwirkenden und die Verformung des Rohrs bewirkenden Kräfte vom Übertragungskabel in dem Rohr fernzuhalten. Dies gelingt insbesondere auch dann, wenn das Übertragungskabel wenigstens im Wesentlichen durch das entsprechend geformte Rohr hindurchgeführt ist. Dabei ist hier der Begriff des Rohrs nicht zwingend sehr eng zu verstehen, das Rohr muss also beispielsweise nicht umlaufend vollständig geschlossen sein und das Rohr muss auch keinen kreisrunden oder wenigstens im Wesentlichen ovalen Querschnitt aufweisen, auch wenn dies grundsätzlich für die elastische Verformung des Rohrs und den Schutz des Übertragungskabels bevorzugt sein wird.

Um eine Beschädigung des Übertragungskabels innerhalb des Rohrs oder an dessen Enden weiter zu verringern, kann es zweckmäßig sein, wenn das wenigstens eine Übertragungskabel durch ein Rohr hindurchgeführt ist, dessen Innendurchmesser um wenigstens 5 %, vorzugsweise um wenigstens 10 %, insbesondere um wenigstens 20 %, größer ist als der Außendurchmesser des Übertragungskabels. Auf diese Weise wird insbesondere ein Scheuern des Übertragungskabels an den Enden des Rohrs und/oder in dem Rohr vermieden.

Zum weiteren Schutz des Übertragungskabels im Verbindungsbereich mit dem Schwimmkörper und/oder mit dem Anker, ist das wenigstens eine Schutzelement fest mit dem wenigstens einen Halteelement einerseits und/oder mit dem wenigstens einen Schwimmkörper oder dem wenigstens einen Anker andererseits verbunden. Von dem Halteelement, dem Schwimmköper und/oder dem Anker werden dann Kräfte insbesondere direkt in das Schutzelement eingeleitet. Von dort werden die Kräfte dann nicht oder nur sehr bedingt auf das Übertragungskabel übertragen. Vielmehr werden die entsprechenden Kräfte auf das entsprechende Schutzelement übertragen und von dort abgeleitet. Um dies konstruktiv einfach und zudem sehr zuverlässig erreichen zu können, ist wenigstens ein Ende des Schutzelements in das Halteelement und/oder je nach der Anordnung des Schutzelements in den Schwimmkörper oder in den Anker eingesteckt.

Damit die Haltekräfte zwischen dem Halteelement und dem Schwimmköper unabhängig von der Verbindung des Übertragungskabels mit dem entsprechenden Schwimmkörper übertragen werden können, bietet es sich an, wenn das wenigstens eine Halteelement unter Umgehung des wenigstens einen Übertragungskabels und/oder des wenigstens einen Schutzelements mit dem wenigstens einen Schwimmkörper verbunden ist. Auf diese Weise wird das Übertragungskabel von den Haltekräften wenigstens überwiegend entlastet. Alternativ oder zusätzlich kann das wenigstens eine Halteelement aber auch unter Umgehung des wenigstens einen Übertragungskabels und/oder des wenigstens einen Schutzelements mit dem wenigstens einen Anker verbunden sein. Dann wird das Übertragungskabel im Verbindungsbereich mit dem Anker entsprechend und wenigstens überwiegend von den Haltekräften zwischen dem Halteelement und dem entsprechenden Anker entlastet. Im Ergebnis wird das Übertragungskabel also weiter geschont.

Damit das wenigstens eine Schutzelement langlebig, stabil und bedarfsweise auch hinreichend elastisch ist, kann es sich anbieten, wenn das wenigstens eine Schutzelement wenigstens teilweise aus einem Metall, insbesondere einem Stahl, aus einem Kunststoff und/oder aus einem faserverstärkten Kunststoff gebildet ist. Hierbei haben die unterschiedlichen Materialien aufgrund ihrer jeweiligen Materialeigenschaften besondere Vorzüge gegenüber den jeweils anderen Materialien, so dass unterschiedliche Materialauswahlen aufgrund unterschiedlicher Anforderungen bevorzugt sein können.

Das wenigstens eine Übertragungskabel kann ein Kommunikationskabel zur Datenübertragung oder zum Datenaustausch oder ein Spannungskabel zur Spannungsversorgung eines elektrischen Verbrauchers sein. Dies erleichtert beispielsweise die Überwachung der Verankerung, die Kommunikation bzw. die Datenübertragung zwischen dem Anker und dem Schwimmkörper oder die Spannungsversorgung von Sensoren und/oder Messsystemen. In diesem Zusammenhang bietet es sich dann insbesondere an, wenn das Übertragungskabel wenigstens eine metallische Leitung und/oder wenigstens einen Lichtwellenleiter, insbesondere eine Glasfaserleitung, umfasst. Auf diese Weise kann einfach und zuverlässig ein Strom und/oder ein Signal übertragen werden.

Zur Überwachung der Verankerung des Offshore-Bauwerks bietet es sich insbesondere an, wenn das wenigstens eine Übertragungskabel mit einem Sensor verbunden ist. Der Sensor kann dann Parameter erfassen, die auf den Zustand der Verankerung des Offshore-Bauwerks rückschließen lassen. Es kommen hierbei insbesondere ein Bewegungssensor und/oder ein Erschütterungssensor in Frage. Zudem kann es sich anbieten, wenn das wenigstens eine Übertragungskabel mit einem Messsystem verbunden ist, das beispielsweise in der Lage ist, den Zustand der Verankerung zu messen und/oder anhand von Daten des wenigstens einen Sensors den Zustand der Verankerung zu ermitteln. Wenn das wenigstens eine Übertragungskabel mit einer Lichtquelle und/oder einer Spannungsquelle verbunden ist, kann ein optisches oder ein elektrisches Signal übertragen werden. In diesem Zusammenhang ist es dann grundsätzlich bevorzugt, wenn der Sensor und/oder das Messsystem und/oder die Lichtquelle und/oder die Spannungsquelle als Teil des Ankers und/oder des Schwimmkörpers ausgebildet ist. Dies vereinfacht die Überwachung der Verankerung sowohl funktional als auch konstruktiv.

Nachfolgend wird die Erfindung anhand einer lediglich ein Ausführungsbeispiel darstellenden Zeichnung näher erläutert. In der Zeichnung zeigt
- Fig. 1: ein Offshore-Bauwerk mit einem schwimmenden Fundament in einer schematischen Darstellung,
- Fig. 2: ein Halteelement des Offshore-Bauwerks aus Fig. 1 in einer schematischen Schnittansicht,
- Fig. 3: ein Schutzelement mitsamt zugehörigem Übertragungskabel des Offshore-Bauwerks aus Fig. 1 in einer schematischen perspektivischen Schnittansicht und in einer schematischen Detailansicht,
- Fig. 4A-B: die Verbindung zwischen dem Schwimmkörper und einem Halteelement des Offshore-Bauwerks aus Fig. 1 in zwei unterschiedlichen Abständen.

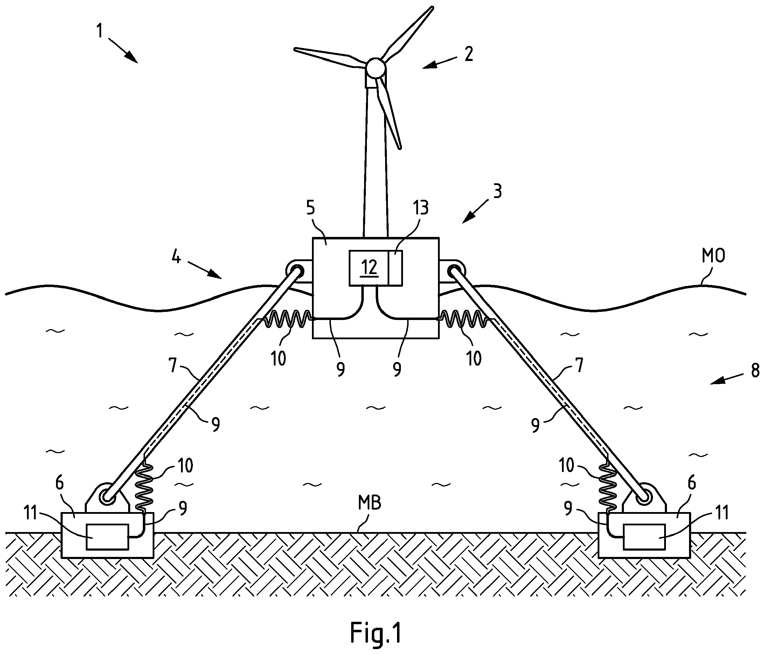

In der Fig. 1 ist ein Offshore-Bauwerk 1 dargestellt, bei dem es sich um eine Offshore-Windkraftanlage 2 handelt. Das Offshore-Bauwerk 1 weist eine Gründung 3 mit einem schwimmenden Fundament 4 auf, das einen Schwimmkörper 5 und mehrere Anker 6 umfasst. Der Schwimmkörper 5 trägt das eigentliche Bauwerk, das vorliegend eine Windkraftanlage 2 ist, und schwimmt auf der Meeresoberfläche MO oder geringfügig darunter. Damit der Schwimmkörper 5 nicht abtreibt, ist dieser über Halteelemente 7 mir den Ankern 6 verbunden, die ihrerseits im oder wenigstens am Meeresboden MB verankert sind. Typischerweise kommen solche schwimmenden Fundamente 4 für Offshore-Bauwerke 1 in Frage, die an Orten im Meer mit erheblichen Wassertiefen installiert werden sollen. Der besseren Übersichtlichkeit halber ist die Fig. 1 daher nicht maßstäblich gezeichnet worden, da die Höhe des Offshore-Bauwerks 1 dann verhältnismäßig klein in Bezug auf die Wassertiefe wäre. Mithin ist zeichnerisch eine Wassertiefe dargestellt worden, in der auch eine Gründung 3 ohne schwimmendes Fundament 4 in Frage gekommen wäre. Tatsächlich sind die Halteelemente 7 also meist sehr viel länger in Bezug auf die Höhe des Offshore-Bauwerks 1.

Damit der Schwimmkörper 5 nicht abtreiben kann, muss sichergestellt werden, dass die Halteelemente 7 den Schwimmkörper 5 sicher an den, beispielsweise zwei bis vier, Ankern 6 halten und dass die Anker 6 zudem sicher im oder am Meeresboden MB gehalten sind. Dies lässt sich aber nur bedingt durch starke Halteelemente 7 und tief in den Meeresboden MB getriebene Anker 6 erreichen, da es bei Sturm oder aus andern Gründen zu einzelnen sehr hohen Lastspitzen kommen kann, die kaum vorhergesagt und berechnet werden können. Dies macht eine Überwachung der Verankerung 8 wünschenswert, um während des Betriebs des Offshore-Bauwerks 1 stets über den Status bzw. den Zustand der Verankerung 8 informiert zu ein und eingreifen zu können, bevor sich das Offshore-Bauwerk 1 lösen oder abtreiben kann.

Aus diesem Grunde ist bei dem dargestellten und insoweit bevorzugten Offshore-Bauwerk 1 jedem Halteelement 7 ein Übertragungskabel 9 zugeordnet. Grundsätzlich könnten einzelne Halteelemente 7 auch ohne Übertragungskabel 9 auskommen, dies wäre aber grundsätzlich weniger bevorzugt. Die Übertragungskabel 9 erstrecken sich im Wesentlichen über die gesamte Länge der Halteelemente 7 zwischen dem zugehörigen Anker 6 und dem Schwimmkörper 5. Lediglich an den beiden Enden der Halteelemente 7 sind die Übertragungskabel 9 nicht direkt an den Halteelementen 7 angebracht. Die Übertragungskabel 9 sind in diesen Bereichen über Schutzelemente 10 zu dem jeweiligen Anker 6 bzw. zu dem Schwimmkörper 5 geführt. Die Schutzelemente 10 schützen die Übertragungskabel 9 vor Beschädigung der Übertragungskabel 9 durch die Relativbewegungen zwischen dem Schwimmkörper 5 und den Ankern 6, die letztlich zu einer Relativbewegung zwischen dem Halteelement 7 einerseits und dem Schwimmkörper 5 bzw. einem Anker 6 andererseits führen. Zum Schutz der Übertragungskabel 9 sind die Übertragungskabel 9 zwischen dem Halteelement 7 einerseits und dem Schwimmkörper 5 bzw. einem Anker 6 andererseits wenigstens abschnittsweise durch das entsprechende Schutzelement 10 hindurchgeführt. Das Schutzelement 10 bildet auf diese Weise eine Art Schutzhülle für das Übertragungskabel, das durch das Schutzelement 10 von außen geschützt wird.

Das Übertragungskabel 9 kann dabei als Kommunikations-, Datenübertragungs- oder Spannungskabel ausgeführt sein, und zwar je nachdem welche Art von Übertragung über das Übertragungskabel 9 erfolgen soll. Zur Übertragung kommen insbesondere Signale in Frage. Es kann zusätzlich oder alternativ auch eine Spannung zum Betrieb eines Sensors 11 oder eines Messsystems 12 übertragen werden. Im vorliegenden Fall ist jedes Übertragungskabel 9 mit einem Sensor 11 verbunden, der in den zugehörigen Anker 9 integriert ist. Es handelt sich bei dem Sensor 11 etwa um einen Bewegungssensor und/oder einen Erschütterungssensor. Der Sensor 11 erzeugt Signale, die über das Übertragungskabel 9 übertragen werden. Die Übertragungskabel 9 sind daher jeweils mit einem Messsystem 12 verbunden, das in den Schwimmkörper 5 integriert ist. Das Messsystem 12 wertet die Signale der Sensoren 11 aus und bestimmt so anhand der Signale den Zustand der Verankerung 8. Wenn ein kritischer Zustand der Verankerung 8 ermittelt wird, so kann das Messsystem 12 beispielsweise ein Alarm oder ein entsprechendes Signal ausgeben. Bedarfsweise kann das Messsystem 12 dabei mit einer Sendeeinrichtung 13 versehen sein, die es erlaubt, entsprechende Signale an Land zu senden, so dass rechtzeitig Gegenmaßnahmen eingeleitet werden können, wenn dies aufgrund des aktuellen Zustands der Verankerung 8 zweckmäßig erscheint. In vielen Fällen wird es zudem zweckmäßig sein, wenn das Übertragungskabel 9 eine metallische Leitung und/oder wenigstens einen Lichtwellenleiter 13, insbesondere eine Glasfaserleitung aufweist. Es können aber auch unterschiedliche Leiter kombiniert werden, etwa um die Spannungsversorgung und die Signalübertragung mittels unterschiedlicher Leitungen zu bewerkstelligen.

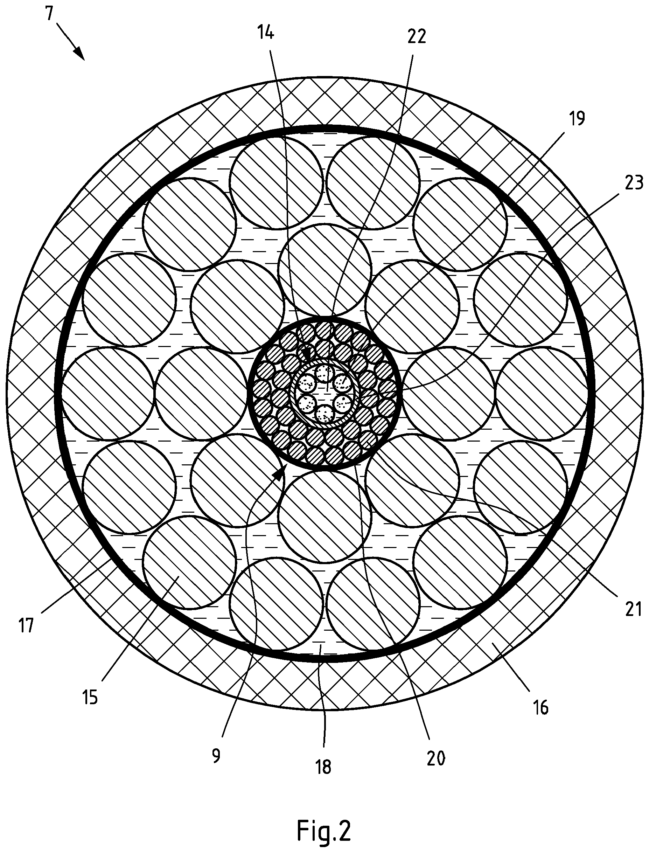

In der Fig. 2 ist ein exemplarisches Halteelement 7 der Gründung 3 der Fig. 1 in Form eines Ankerseil in einem Schnitt dargestellt, in das, insbesondere in Form einer Einlage, ein Übertragungskabel 9 intergiert ist. Das Übertragungskabel 9 umfasst dabei einen Lichtwellenleiter 14 und ist zum Schutz desselben in der Mitte des Halteelements 7 aufgenommen. Um das Übertragungskabel 9 sind mehrere Halteseile 15 beispielsweise aus Stahl oder Kunststofffasern vorgesehen, die die Haltekräfte des Halteelements 7 übertragen. Zum Schutz dieser Halteseile 15 sind diese durch eine äußere Ummantelung 16, etwa aus einem Kunststoffmaterial, umfasst. Zwischen dieser äußeren Ummantelung 16 und den Halteseilen 15 ist zudem noch eine Sandschutzschicht 17 vorgesehen, um die Halteseile 15 gegenüber einem Durchscheuern zu schützen. Das dargestellte und insoweit bevorzugte Halteelement 7 weist zudem ein Füllmaterial 18 auf, das Hohlräume zwischen den Halteseilen 15 ausfüllt. So wird zudem eine im Wesentlichen kreisförmige Querschnittsform des Halteelements 7 bereitgestellt.

Der Lichtwellenleiter 14 weist vorliegend eine Mehrzahl von optischen Fasern 19 auf. Die optischen Fasern 19 sind von einem Rohrelement 20 umgeben. Das Rohrelement 20 kann aus Metall und/oder mindestens einem Kunststoffmaterial gebildet sein. Das Rohrelement 20 dient insbesondere dem Schutz der innerhalb des Rohrelements 20 angeordneten optischen Fasern 19. Um den Schutz noch weiter zu verbessern, ist eine Armierungsschicht 21, vorliegend gebildet aus zwei Sub-Armierungsschichten, jeweils aus einer Mehrzahl von Armierungsseilen, vorgesehen. Die Armierungsschicht 21 umgibt insbesondere unmittelbar das Rohrelement 20. Vorzugsweise kann eine erste Sub-Armierungsschicht aus Armierungsseilen gebildet sein, die beispielsweise aus Stahl hergestellt sind, und die weitere Sub-Armierungsschicht aus Armierungsseilen gebildet sein, die aus einem Faserverbundwerkstoff hergestellt sind. Es könnte aber auch nur eine Sub-Schicht, mehr als zwei Sub-Schichten und/oder Armierungsseile aus einem anderen Material vorgesehen sein. Darüber hinaus ist das Rohrelement 20 mit einem viskoelastischen Fluid 22 gefüllt, beispielsweise einem Silikongel. Ferner weist der Lichtwellenleiter 14 vorliegend als äußere Schicht eine Kunststoffschicht 23 auf, insbesondere aus extrudiertem Kunststoff, um die darin befindlichen Komponenten zusammenzuhalten.

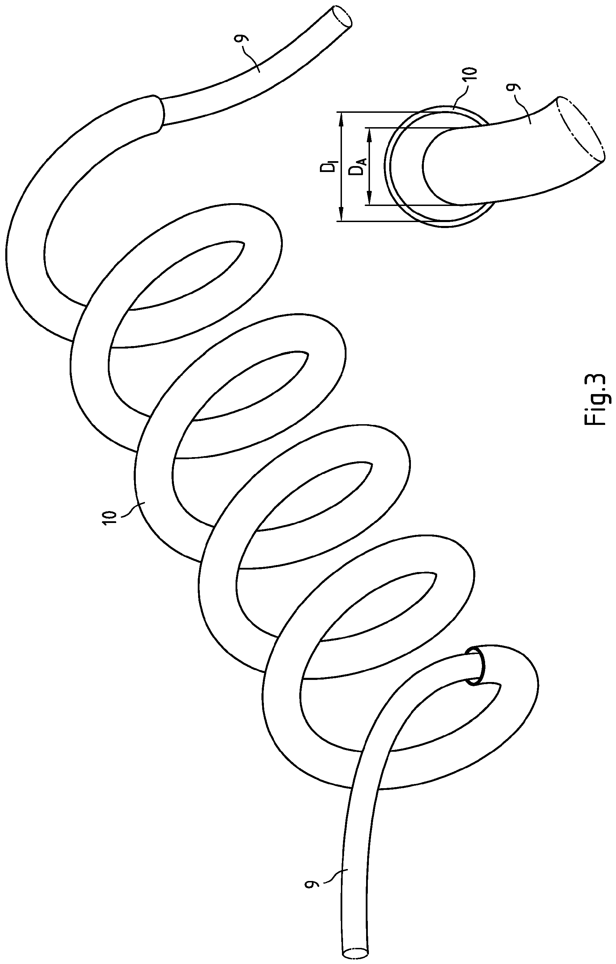

Im Bereich der Enden der Halteelemente 7 sind die Übertragungskabel 9 aus den Halteelementen 7 herausgeführt und verlaufen wenigstens abschnittsweise in einem Schutzelement 10, wie dies in der Fig. 3 dargestellt ist. Bei dem dargestellten und insoweit bevorzugten Schutzelement 10 handelt es sich um eines, das aus einem Rohr gebildet ist, und durch das das Übertragungskabel 9 hindurchgeführt ist. Dabei ist der Innendurchmesser D_{I} des Schutzelements 10 etwas größer als der Außendurchmesser D_{A} des Übertragungskabels 9. Um den Relativbewegungen zwischen den Halteelementen 7 und dem Schwimmkörper 5 und den Ankern 6 Rechnung zu tragen, ist das Schutzelement 10 nach Art einer Schraubenfeder gebogen. So kann die Längserstreckung der Schutzelemente 10 zwischen den Halteelementen 7 und dem Schwimmkörper 5 bzw. den Ankern 6 wiederholt ab- und zunehmen, ohne dass dies zur einer Beschädigung der Schutzelemente 10 oder der Übertragungskabel 9 führt.

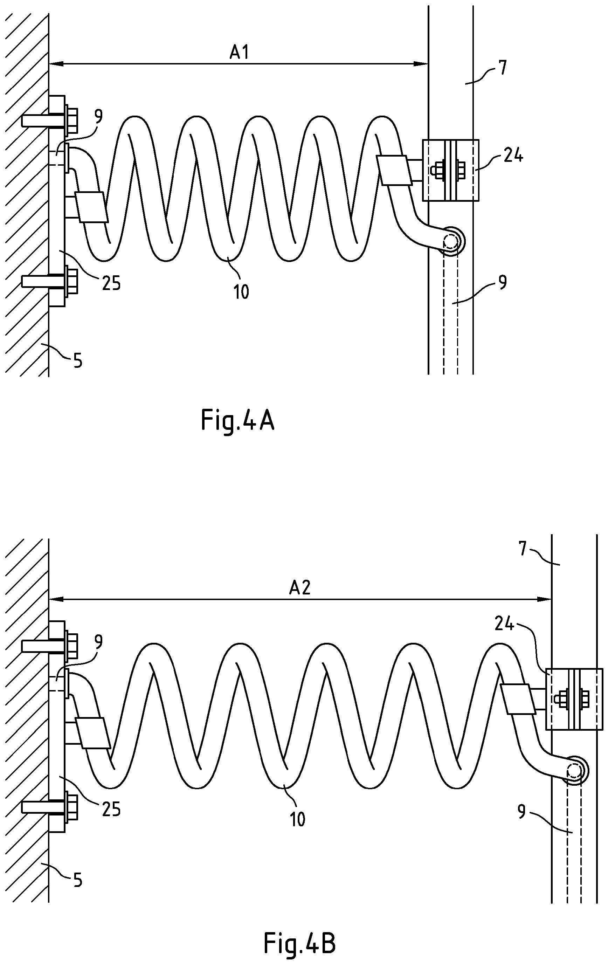

In den Fig. 4A-B ist die Verbindung zwischen einem Halteelement 7 und dem Schwimmkörper 5 sowie die Verbindung zwischen einem Übertragungskabel 9 und dem Schwimmkörper 5 dargestellt. Die entsprechenden Verbindungen des Halteelements 7 und des Übertragungskabels 9 mit einem Anker 6 erfolgen bei der dargestellten und insoweit bevorzugten Gründung 3 analog. Die Fig. 4A-B zeigen dieselbe Verbindung, wobei jedoch der Abstand A1, A2 zwischen dem Schwimmkörper 5 und dem Halteelement 7 in der Fig. 4A kürzer ist als in der Fig. 4B. Das Schutzelement 10 ist mit einem Ende in das Halteelement 7 hineingeführt, so dass das Übertragungskabel 9 bereits in dem Halteelement 7 in das Schutzelement 10 eingeführt wird. Dies ist jedoch nicht zwingend erforderlich. Dem Halteelement 7 ist zudem ein Schellenelement 24 zugeordnet, das das Schutzelement 10 zuverlässig an dem Halteelement 7 hält und positioniert. Zudem ist das gegenüberliegende Ende des Schutzelements 10 über eine Anschlusseinrichtung 25, die vorliegend insbesondere als Anschlussplatte ausgebildet ist, fest mit dem Schwimmkörper 5 verbunden. Die Anschlusseinrichtung 25 hält und positioniert das Halteelement 7 zuverlässig am Schwimmkörper 5. Eine Abstandsvariation zwischen dem Halteelement 7 und dem Schwimmköper 5 zwischen den Abständen A1 und A2 der Fig. 4A-B führt zu einem Stauchen oder Strecken des nach Art einer Schraubenfeder ausgebildeten Schutzelements 10, ohne dass dadurch Kräfte in einer kritischen Größenordnung auf das Übertragungskabel 9 einwirken können. Durch die feste Verbindung des Schutzelements 10 mit dem Schwimmköper 5 und dem Halteelement 7 können zudem Kräfte direkt und unter Umgehung des Übertragungskabels 9 vom Schwimmkörper 5 über das Schutzelement 10 auf das Haltelement 7 und umgekehrt übertragen werden. Um eine ausreichende Flexibilität des Schutzelements 10 bei geleichzeitig ausreichender Festigkeit und Robustheit bereitzustellen, kann das Schutzelement 10 aus einem Stahl, aus einem Kunststoff und/oder aus einem faserverstärkten Kunststoff gebildet sein.

Nicht im Einzelnen ist in den Fig. 4A-B die Verbindung des Halteelements 7 mit dem Schwimmkörper 5 dargestellt. Diese Verbindung ist von der Verbindung des Schwimmkörpers 5 mit dem Übertragungskabel 9 beabstandet und kann auf konventionelle Art erfolgen, etwa über an dem Schwimmkörper 5 festgelegte Ösen. Das entsprechende Halteelement 7 ist mithin unter Umgehung des wenigstens einen Übertragungskabels 9 und des wenigstens einen Schutzelements 10 fest mit dem Schwimmkörper 5 verbunden.

### Bezugszeichenliste

- 1: Offshore-Bauwerk
- 2: Windkraftanlage
- 3: Gründung
- 4: Fundament
- 5: Schwimmkörper
- 6: Anker
- 7: Halteelement
- 8: Verankerung
- 9: Übertragungskabel
- 10: Schutzelemente
- 11: Sensor
- 12: Messsystem
- 13: Sendeeinrichtung
- 14: Lichtwellenleiter
- 15: Halteseil
- 16: äußere Ummantelung
- 17: Sandschutzschicht
- 18: Füllmaterial
- 19: optische Faser
- 20: Rohrelement
- 21: Armierungsschicht
- 22: viskoelastisches Fluid
- 23: Kunststoffschicht
- 24: Schellenelement
- 25: Anschlusseinrichtung
- MB: Meeresboden
- MO: Meeresoberfläche

## Patentansprüche

1. Gründung (3) eines Offshore-Bauwerks (1), insbesondere einer Windkraftanlage (2), mit einem schwimmenden Fundament (4), umfassend wenigstens einen Schwimmkörper (5) zum Schwimmen an der Meeresoberfläche (MO), wenigstens einen Anker (6) zum Verankern des wenigstens einen Schwimmkörpers (5) am Meeresboden (MB) und wenigstens ein Halteelement (7) zum Halten des wenigstens einen Schwimmkörpers (5) an dem wenigstens einen Anker (6), wobei sich wenigstens ein Übertragungskabel (9) von dem wenigstens einen Anker (6) entlang des wenigstens einen Halteelements (7) zum wenigstens einen Schwimmkörper (7) und/oder zurück erstreckt, wobei das Übertragungskabel (9) abschnittsweise durch wenigstens ein zwischen dem Halteelement (7) und dem wenigstens einen Anker (6) und/oder dem wenigstens einen Schwimmkörper (5) vorgesehenes Schutzelement (10) hindurchgeführt ist und wobei das wenigstens eine Schutzelement (10) fest mit dem wenigstens einen Halteelement (7) und/oder mit dem wenigstens einen Schwimmkörper (5) oder dem wenigstens einen Anker (6) verbunden ist,
**dadurch gekennzeichnet, dass**
wenigstens ein Ende des Schutzelements (10) in das Halteelement (7) und/oder den Schwimmkörper (5) oder Anker (6) eingesteckt ist.

2. Gründung nach Anspruch 1,
**dadurch gekennzeichnet, dass**
das wenigstens eine Halteelement (7) eine Ankerkette oder ein Ankerseil ist und dass, vorzugsweise, das Ankerseil aus Kunststofffasern oder aus Metalldrähten, insbesondere Stahldrähten, gebildet ist.

3. Gründung nach Anspruch 2,
**dadurch gekennzeichnet, dass**
das wenigstens eine Übertragungskabel (9) wenigstens überwiegend innerhalb des Halteelements (7), insbesondere Ankerseils, angeordnet ist und dass, vorzugsweise, das wenigstens eine Übertragungskabel (9) als Litze oder als Einlage in dem Ankerseil wenigstens überwiegend innerhalb des Ankerseils angeordnet ist.

4. Gründung nach einem der Ansprüche 1 bis 3,
**dadurch gekennzeichnet, dass**
das wenigstens eine Schutzelement (10) wenigstens abschnittsweise, insbesondere wenigstens im Wesentlichen vollständig, durch ein nach Art einer Schraubenfeder geformtes Rohr gebildet ist und dass das wenigstens eine Übertragungskabel (9) durch das Schutzelement (10) hindurchgeführt ist und dass, vorzugsweise, der Innendurchmesser des Schutzelements (10) um wenigstens 5 %, vorzugsweise um wenigstens 10 %, insbesondere um wenigstens 20 %, größer ist als der Außendurchmesser des Übertragungskabels (9).

5. Gründung nach einem der Ansprüche 1 bis 4,
**dadurch gekennzeichnet, dass**
das wenigstens eine Halteelement (7) unter Umgehung des wenigstens einen Übertragungskabels (9) und/oder des wenigstens einen Schutzelements (10) mit dem wenigstens einen Schwimmkörper (5) verbunden ist und/oder dass das wenigstens eine Halteelement (7) unter Umgehung des wenigstens einen Übertragungskabels (9) und/oder des wenigstens einen Schutzelements (10) mit dem wenigstens einen Anker (6) verbunden ist.

6. Gründung nach einem der Ansprüche 1 bis 5,
**dadurch gekennzeichnet, dass**
das wenigstens eine Schutzelement (10) wenigstens teilweise aus einem Metall, insbesondere einem Stahl, aus einem Kunststoff und/oder aus einem faserverstärkten Kunststoff gebildet ist.

7. Gründung nach einem der Ansprüche 1 bis 6,
**dadurch gekennzeichnet, dass**
das wenigstens eine Übertragungskabel(9) ein Kommunikationskabel zur Datenübertragung oder zum Datenaustausch oder ein Spannungskabel zur Spannungsversorgung eines elektrischen Verbrauchers ist und dass, vorzugsweise, das Übertragungskabel wenigstens eine metallische Leitung und/oder wenigstens einen Lichtwellenleiter (14), insbesondere eine Glasfaserleitung, umfasst.

8. Gründung nach einem der Ansprüche 1 bis 7,
**dadurch gekennzeichnet, dass**
das wenigstens eine Übertragungskabel (9) mit einem Sensor (11), insbesondere einem Bewegungssensor und/oder Erschütterungssensor, und/oder einem Messsystem (12) und/oder einer Lichtquelle und/oder einer Spannungsquelle verbunden ist und dass, vorzugsweise, der Sensor (11) und/oder das Messsystem (12) und/oder die Lichtquelle und/oder die Spannungsquelle Teil des Ankers (6) und/oder des Schwimmkörpers (5) ist.

9. Offshore-Bauwerk, insbesondere Offshore-Windkraftanlage, mit einer Gründung,
**dadurch gekennzeichnet, dass**
die Gründung (3) nach einem der Ansprüche 1 bis 8 ausgebildet ist.

## Claims

1. Foundation structure (3) of an offshore structure (1), in particular of a wind turbine (2), with a floating foundation (4), comprising at least one floating body (5) for floating on the surface of the sea (MO), at least one anchor (6) for anchoring the at least one floating body (5) to the seafloor (MB) and at least one holding element (7) for holding the at least one floating body (5) to the at least one anchor (6), wherein at least one transmission cable (9) extends from the at least one anchor (6) along the at least one holding element (7) to the at least one floating body (7) and/or back, wherein the transmission cable (9) is guided in sections through at least one protection element (10) provided between the holding element (7) and the at least one anchor (6) and/or the at least one floating body (5) and wherein the at least one protection element (10) is fixedly connected to the at least one holding element (7) and/or to the at least one floating body (5) or to the at least one anchor (6),
**characterised in that**
at least one end of the protection element (10) is inserted into the holding element (7) and/or the floating body (5) or anchor (6).

2. Foundation structure according to claim 1, **characterised in that** the at least one holding element (7) is an anchor chain or an anchor rope and **in that**, preferably, the anchor rope is formed of plastic fibres or of metal wires, in particular steel wires.

3. Foundation structure according to claim 2, **characterised in that** the at least one transmission cable (9) is arranged at least predominantly inside the holding element (7), in particular inside the anchor rope, and **in that**, preferably, the at least one transmission cable (9) is arranged as a strand or as an insert in the anchor rope at least predominantly inside the anchor rope.

4. Foundation structure according to any one of claims 1 to 3, **characterised in that** the at least one protection element (10) is formed at least in sections, in particular at least substantially completely, by a tube formed in the manner of a coil spring and **in that** the at least one transmission cable (9) is guided through the protection element (10) and **in that**, preferably, the inner diameter of the protection element (10) is greater than the outer diameter of the transmission cable (9) by at least 5%, preferably by at least 10%, in particular by at least 20%.

5. Foundation structure according to any one of claims 1 to 4, **characterised in that** the at least one holding element (7) is connected to the at least one floating body (5) by bypassing the at least one transmission cable (9) and/or the at least one protection element (10) and/or **in that** the at least one holding element (7) is connected to the at least one anchor (6) by bypassing the at least one transmission cable (9) and/or the at least one protection element (10).

6. Foundation structure according to any one of claims 1 to 5, **characterised in that** the at least one protection element (10) is formed at least partially of a metal, in particular a steel, of a plastic and/or of a fibre-reinforced plastic.

7. Foundation structure according to any one of claims 1 to 6, **characterised in that** the at least one transmission cable (9) is a communication cable for data transmission or for data exchange or a voltage cable for supplying voltage to an electrical consumer and **in that**, preferably, the transmission cable comprises at least one metallic line and/or at least one optical waveguide (14), in particular a fibre optic cable.

8. Foundation structure according to any one of claims 1 to 7, **characterised in that** the at least one transmission cable (9) is connected to a sensor (11), in particular to a motion sensor and/or vibration sensor, and/or to a measuring system (12) and/or to a light source and/or to a voltage source and **in that**, preferably, the sensor (11) and/or the measuring system (12) and/or the light source and/or the voltage source is part of the anchor (6) and/or of the floating body (5).

9. Offshore structure, in particular offshore wind turbine, with a foundation structure, **characterised in that** the foundation structure (3) is formed according to any one of claims 1 to 8.

## Revendications

1. Fondation (3) d'une construction en mer (1), notamment d'une éolienne (2), avec une fondation flottante (4), comprenant au moins un corps flottant (5) destiné à flotter à la surface de la mer (MO), au moins un ancrage (6) pour ancrer ledit au moins un corps flottant (5) au fond marin (MB) et au moins un élément de retenue (7) destiné à retenir ledit au moins un corps flottant (5) audit au moins un ancrage (6), au moins un câble de transmission (9) s'étendant à partir dudit au moins un ancrage (6) le long dudit au moins un élément de retenue (7) vers ledit au moins un corps flottant (7) et/ou retour, le câble de transmission (9) étant acheminé, par sections, à travers au moins un élément de protection (10) prévu entre l'élément de retenue (7) et ledit au moins un ancrage (6) et/ou ledit au moins un corps flottant (5), ledit au moins un élément de protection (10) étant fermement fixé avec ledit au moins un élément de retenue (7) et/ou avec ledit au moins un corps flottant (5) ou avec ledit au moins un ancrage (6), **caractérisée en ce qu'**au moins une extrémité de l'élément de protection (10) est insérée dans l'élément de retenue (7) et/ou dans le corps flottant (5) ou l'ancrage (6).

2. Fondation selon la revendication 1, **caractérisée en ce que** ledit au moins un élément de retenue (7) est une chaîne d'ancrage ou un cordon d'ancrage et **en ce que**, de préférence, le cordon d'ancrage est conçu par des fibres synthétiques ou des fils métalliques, notamment des fils en acier.

3. Fondation selon la revendication 2, **caractérisée en ce que** ledit au moins un câble de transmission (9) est agencé, au moins principalement, à l'intérieur de l'élément de retenue (7), notamment du cordon d'ancrage, et **en ce que**, de préférence, ledit au moins un câble de transmission (9) est agencé, en tant que toron ou en tant qu'insert, dans le cordon d'ancrage, au moins principalement, à l'intérieur du cordon d'ancrage.

4. Fondation selon l'une quelconque des revendications 1 à 3, **caractérisée en ce que** ledit au moins un élément de protection (10) est constitué, au moins partiellement, notamment au moins sensiblement entièrement, par un tube conçu à la manière d'un ressort hélicoïdal, et **en ce que** ledit au moins un câble de transmission (9) est acheminé à travers l'élément de protection (10) et **en ce que**, de préférence, le diamètre intérieur de l'élément de protection (10) est d'au moins 5 %, de préférence d'au moins 10 %, notamment d'au moins 20 %, supérieur au diamètre extérieur du câble de transmission (9).

5. Fondation selon l'une quelconque des revendications 1 à 4, **caractérisée en ce que** ledit au moins un élément de retenue (7) est relié, en contournant ledit au moins un câble de transmission (9) et/ou ledit au moins un élément de protection (10), audit au moins un corps flottant (5) et/ou **en ce que** ledit au moins un élément de retenue (7) est relié, en contournant ledit au moins un câble de transmission (9) et/ou ledit au moins un élément de protection (10), audit au moins un ancrage (6).

6. Fondation selon l'une quelconque des revendications 1 à 5, **caractérisée en ce que** ledit au moins un élément de protection (10) est constitué, au moins partiellement, d'un métal, notamment d'un acier, d'une matière synthétique et/ou d'une matière synthétique renforcée de fibres.

7. Fondation selon l'une quelconque des revendications 1 à 6, **caractérisée en ce que** ledit au moins un câble de transmission (9) est un câble de communication pour la transmission de données ou pour l'échange de données ou un câble d'alimentation pour l'alimentation en tension électrique d'un consommateur électrique et **en ce que**, de préférence, le câble de transmission comprend au moins un câble métallique et/ou au moins un conducteur à fibres optiques (14), notamment une ligne en fibres de verre.

8. Fondation selon l'une quelconque des revendications 1 à 7, **caractérisée en ce que** ledit au moins un câble de transmission (9) est relié à un capteur (11), notamment à un capteur de mouvement et/ou un capteur de vibrations, et/ou à un système de mesure (12) et/ou à une source de lumière et/ou à une source de tension électrique et **en ce que**, de préférence, le capteur (11) et/ou le système de mesure (12) et/ou la source de lumière et/ou la source de tension électrique font partie de l'ancrage (6) et/ou du corps flottant (5).

9. Construction en mer, notamment une éolienne offshore avec une fondation, **caractérisée en ce que** la fondation (3) est conçue selon l'une quelconque des revendications 1 à 8.
